# EUROPÄISCHE PATENTSCHRIFT

(11) **EP 3 868 567 B1**
(45) Veröffentlichungstag und Bekanntmachung des Hinweises auf die Patenterteilung: **03.07.2024**
(21) Anmeldenummer: 21157748.1
(22) Anmeldetag: 18.02.2021
(51) Int. Cl.: B23K 26/352, B23K 26/359, B44C 1/22, B44F 1/02, B44D 5/00, C25D 5/56, B44F 1/08, C25D 5/00, C25D 5/02, C25D 5/14, B23K 101/34

(54) **VERFAHREN ZUM HERSTELLEN EINER DEKOROBERFLÄCHE**
METHOD FOR PRODUCING A DECORATIVE SURFACE
PROCÉDÉ DE PRODUCTION D'UNE SURFACE DÉCORATIVE

(30) Priorität: 18.02.2020 DE 102020104255
(43) Veröffentlichungstag der Anmeldung: 25.08.2021
(73) Patentinhaber: Fischer Oberflächentechnologie GmbH, 56368 Katzenelnbogen (DE)
(72) Erfinder: Lohmann, Albert, 65549 Limburg (DE); Fahland, Sebastian, 56368 Klingelbach (DE); Braun, Robert, 56379 Singhofen (DE)
(74) Vertreter: Daub, Thomas

(56) Entgegenhaltungen:
- DE-A1-102005 041 375
- DE-A1-102006 026 789
- DE-U1-202015 001 879

## Beschreibung

### Stand der Technik

Die Erfindung betrifft ein Verfahren zum Herstellen einer Dekoroberfläche eines Bauteils sowie ein Bauteil mit einer Dekoroberfläche, die gemäß dem Verfahren hergestellt ist.

Es ist bereits vorgeschlagen worden, dass in zumindest einem Verfahrensschritt zumindest ein Grundkörper des Bauteils, der aus einem galvanisierbaren Material hergestellt ist, mit zumindest einer metallischen Schicht galvanisiert wird.

Aus DE 20 2019 103 960 U1 sind ein Bedienelement mit hinterleuchtbarer Symbolik sowie ein Verfahren zu einer Herstellung eines Bedienelements bekannt, wobei eine Auftragsmasse auf eine galvanisierbare Oberfläche aufgebracht wird und in ausgewählten Bereichen, insbesondere Bereichen, die später eine Symbolik ausbilden sollen, mittels eines Lasers ausgehärtet wird. Nicht-ausgehärtete Bereiche der Auftragsmasse werden wieder von der galvanisierbaren Schicht entfernt. In einem weiteren Verfahrensschritt wird eine dünne metallische Schicht auf die wieder von der Auftragsmasse befreiten Bereiche der galvanisierbaren Schicht aufgebracht.

Ferner sind aus DE 20 2015 001 879 U1 ein galvanisch dekoriertes Bauteil sowie ein Verfahren zur Herstellung des Bauteils bekannt. Ein Grundkörper aus galvanisierbarem Kunststoff wird in einem Verfahrensschritt hergestellt und durch Galvanisierung mit mehreren Hilfsschichten versehen, bevor eine Chromschicht aufgetragen wird. In einem weiteren Verfahrensschritt wird eine Bürstung oder eine Strukturierung einer Referenzoberfläche, vorzugsweise eines Metallbauteils, erfasst und zu einem 3D-Datensatz konvertiert. Die Chromschicht wird dann gemäß des 3D-Datensatzes mit einem Laser über Laserabtrag bearbeitet, um die Bürstung oder die Strukturierung an der Chromschicht nachzubilden, wobei insbesondere Material der Chromschicht abgetragen wird.

Des Weiteren sind aus DE 20 2013 009 793 U1 ein galvanisch dekoriertes Bauteil mit einer in einer Oberfläche durchleuchtbar gestalteten eingebrachten Symbolik sowie einem entsprechenden Verfahren zur Herstellung des Bauteils bekannt. Ein aus galvanisierbarem Kunststoff ausgebildeter Grundkörper wird nach einer Herstellung mit einem nichtgalvanisierbaren Lack bedruckt, wobei insbesondere die Symbolik aufgebracht wird. Anschließend wird eine Außenkontur des Lack-Aufdrucks mit einem Laser bearbeitet, um einen sauberen Kantenverlauf zu erzeugen. In einem weiteren Verfahrensschritt wird bei einem Galvanisieren eine metallische Schicht auf die nicht-bedruckten Bereiche des Bauteils aufgebracht.

Aus der Druckschrift DE 10 2006 026789 A1 ist ein Verfahren sowie eine Herstellung eines mit einem Dekor versehenen Kunststoffprofils bekannt.

Aus der Druckschrift DE 10 2005 041375 A1 ist ein Verfahren zur Erzeugung dekorativer Oberflächenstrukturen bekannt.

Die Aufgabe der Erfindung besteht insbesondere darin, ein gattungsgemäßes Verfahren mit verbesserten Eigenschaften hinsichtlich einer Optik und einer Haptik der Dekoroberfläche sowie hinsichtlich einer Einfachheit und Schnelligkeit zu einer Herstellung einer Dekoroberfläche, insbesondere mit einem positionsselektiv aufgebrachten Dekor, bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die erfindungsgemäße Lösung dieser Aufgabe stellt ein Verfahren mit den Merkmalen von Hauptanspruch 1 dar. Vorteilhafte Ausgestaltungen des Verfahrens sind Gegenstand der sich an den Hauptanspruch anschließenden abhängigen Ansprüche.

Die Erfindung geht aus von einem Verfahren zum Herstellen einer Dekoroberfläche eines Bauteils, insbesondere eines Fahrzeugdekorbauteils, wobei in zumindest einem Verfahrensschritt zumindest ein Grundkörper des Bauteils, der aus einem galvanisierbaren Material hergestellt ist, mit zumindest einer metallischen Schicht, insbesondere zumindest einer Chromschicht, galvanisiert wird, wobei in zumindest einem Verfahrensschritt zumindest eine Oberfläche der metallischen Schicht mittels eines Lasers behandelt wird, wodurch zumindest eine optische Eigenschaft zumindest einer Oberfläche der metallischen Schicht verändert wird.

Es wird vorgeschlagen, dass in zumindest einem Verfahrensschritt der Laser in zumindest im Wesentlichen parallel zueinander ausgerichteten Linien, gleichmäßig, über die Oberfläche der metallischen Schicht gefahren wird, wobei ein minimaler Abstand der Linien höchstens 0,12 mm, vorzugsweise höchstens 0,10 mm, bevorzugt höchstens 0,8 mm und besonders bevorzugt höchstens 0,06 mm, beträgt, wobei der Laser zur Behandlung der Oberfläche der metallischen Schicht mit einer konstanten Geschwindigkeit relativ zu der Oberfläche der metallischen Schicht bewegt wird und wobei der Laser während der Behandlung der Oberfläche der metallischen Schicht in einem zumindest im Wesentlichen gleichbleibenden Abstand zu der Oberfläche der metallischen Schicht bewegt wird. Es kann eine vorteilhaft gleichmäßige Behandlung der Oberfläche ermöglicht werden. Es kann eine vorteilhaft homogene Erscheinung der behandelten Oberfläche erreicht werden. Es können vorteilhaft ansprechende optische Eigenschaften einer mit dem Laser behandelten, als Chromschicht ausgebildeten äußeren metallischen Schicht erreicht werden. Durch eine gezielte Anpassung des Abstands der mit dem Laser abgefahrenen Linien und/oder weiterer Parameter des Lasers zur Behandlung der Oberfläche, wie beispielsweise einer Geschwindigkeit des Lasers relativ zur Oberfläche o. dgl., können verschiedene optische Eigenschaften, insbesondere verschiedene Farbmuster, der Oberfläche erreicht werden.

Bevorzugt bildet die metallische Schicht die Oberfläche des Bauteils oder ist zumindest Teil der Oberfläche des Bauteils. Vorzugsweise wird zumindest ein Teilbereich der Oberfläche des Bauteils, insbesondere die mittels des Lasers zu behandelnde Oberfläche, insbesondere bei einem Galvanisieren, zumindest im Wesentlichen vollständig von der metallischen Schicht bedeckt. Bevorzugt wird bei einem Galvanisieren des Grundkörpers der Grundkörper, insbesondere eine Außenfläche des Grundkörpers, zumindest im Wesentlichen vollständig mit der metallischen Schicht bedeckt. Unter "im Wesentlichen vollständig" soll insbesondere verstanden werden, dass mindestens 95%, vorzugsweise mindestens 98% und besonders bevorzugt mindestens 99%, eines Körpers oder einer Fläche, insbesondere des Grundkörpers und/oder der Außenfläche, eine Eigenschaft, insbesondere von der metallischen Schicht bedeckt zu sein, aufweisen. Vorzugsweise ist die metallische Schicht als eine Chromschicht, insbesondere als eine Schicht aus mikroporigem Chrom, ausgebildet. Bevorzugt ist die Chromschicht nach dem Galvanisieren glänzend ausgebildet. Es ist aber auch denkbar, dass die Chromschicht nach dem Galvanisieren matt ausgebildet ist und in zumindest einem Verfahrensschritt, insbesondere nach einem Galvanisieren und/oder vor einer Behandlung mittels des Lasers, poliert wird. Besonders bevorzugt wird die zumindest eine optische Eigenschaft der Oberfläche mittels des Lasers derart geändert, dass die Oberfläche matt ausgebildet ist und/oder eine Mattoptik aufweist. Vorzugsweise wird die Dekoroberfläche aus der mittels des Lasers behandelten Oberfläche und zumindest einer an die Oberfläche angrenzenden weiteren Oberfläche des Bauteils, insbesondere der metallischen Schicht, gebildet. Bevorzugt ist die weitere Oberfläche, insbesondere bis auf ein Galvanisieren der weiteren Oberfläche, unbehandelt ausgebildet, wobei insbesondere die weitere Oberfläche bei einer Behandlung mittels des Lasers ausgespart wird. Besonders bevorzugt bilden/bildet die Oberfläche und/oder die weitere Oberfläche die Dekoroberfläche. Unter einer "optischen Eigenschaft" soll insbesondere eine messbare Kenngröße oder eine Kombination von messbaren Kenngrößen verstanden werden, welche einen optischen Eindruck eines Objekts, insbesondere der Oberfläche, für einen Benutzer, insbesondere das menschliche Auge, beeinflusst. Beispielsweise ist die optische Eigenschaft als eine Glanzkenngröße, als eine Farbe und/oder als eine Transparenzkenngröße der Oberfläche und/oder der metallischen Schicht ausgebildet. Vorzugsweise wird mittels des Lasers zumindest eine optische Eigenschaft der Oberfläche des Bauteils, insbesondere der metallischen Schicht, über ein, insbesondere teilweises, Abtragen der metallischen Schicht und/oder einer äußersten metallischen Schicht, über eine Verformung der Oberfläche des Bauteils, insbesondere der metallischen Schicht, und/oder über eine chemische Reaktion, insbesondere eine Oxidation, zumindest eines Stoffs der metallischen Schicht, einer äußersten metallischen Schicht und/oder einer weiteren metallischen Schicht, welche insbesondere unterhalb der äußersten metallischen Schicht angeordnet ist, verändert.

Unter "im Wesentlichen parallel" soll insbesondere eine Ausrichtung einer Geraden, einer Ebene oder einer Richtung, insbesondere einer Erstreckungsrichtung einer der Linien, relativ zu einer weiteren Gerade, einer weiteren Ebene oder einer Bezugsrichtung, insbesondere einer Erstreckungsrichtung einer anderen der Linien, verstanden werden, wobei die Gerade, die Ebene oder die Richtung gegenüber der weiteren Geraden, der weiteren Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2° aufweist. Bevorzugt verlaufen die Linien zumindest im Wesentlichen parallel zur der mittels des Lasers zu behandelnden Oberfläche. Es ist denkbar, insbesondere falls die zu behandelnde Oberfläche als ebene Fläche ausgebildet ist, dass die Linien als geradlinige Strecken ausgebildet sind. Es ist aber auch denkbar, dass eine zumindest teilweise gebogene Oberfläche der metallischen Schicht mittels des Lasers behandelt wird, wobei insbesondere die Linien als gebogene Strecken ausgebildet sind. Vorzugsweise verlaufen die Linien, insbesondere unabhängig von einer Ausgestaltung der mittels des Lasers zu behandelnden Oberfläche, jeweils innerhalb einer Ebene. Vorzugsweise sind die Ebenen der Linien jeweils zumindest im Wesentlichen parallel zueinander ausgerichtet. Insbesondere beträgt ein minimaler Abstand der Linien mindestens 0,02 mm, vorzugsweise mindestens 0,03 mm und besonders bevorzugt mindestens 0,04 mm. Bevorzugt weist die Geschwindigkeit des Lasers relativ zur Oberfläche einen Wert aus einem Wertebereich von insbesondere 300 mm/s bis 1300 mm/s, vorzugsweise 500 mm/s bis 1100 mm/s und besonders bevorzugt 700 mm/s bis 900 mm/s, auf. insbesondere beträgt die Geschwindigkeit des Lasers relativ zur Oberfläche bei der Behandlung der Oberfläche zumindest im Wesentlichen 800 mm/s. Alternativ ist denkbar, dass der Laser in zumindest einem Verfahrensschritt zur Behandlung der Oberfläche ein Gittermuster abfährt, wobei insbesondere der Laser in beabstandeten Linien über die Oberfläche gefahren wird und anschließend in zumindest im Wesentlichen senkrecht zu den Linien ausgerichteten weiteren Linien über die Oberfläche gefahren wird. Vorzugsweise weisen die Linien jeweils zu direkt benachbarten Linien, insbesondere in dem Gittermuster, einen minimalen Abstand von höchstens 0,16 mm, vorzugsweise höchstens 0,14 mm, bevorzugt höchstens 0,12 mm und besonders bevorzugt höchstens 0,11 mm, auf. insbesondere beträgt ein minimaler Abstand der Linien jeweils zu direkt benachbarten Linien, insbesondere in dem Gittermuster, mindestens 0,03 mm, vorzugsweise mindestens 0,05 mm und besonders bevorzugt mindestens 0,06 mm. Vorzugsweise weisen die weiteren Linien jeweils zu direkt benachbarten weiteren Linien, insbesondere in dem Gittermuster, einen minimalen Abstand von höchstens 0,16 mm, vorzugsweise höchstens 0,14 mm, bevorzugt höchstens 0,12 mm und besonders bevorzugt höchstens 0,11 mm, auf. insbesondere beträgt ein minimaler Abstand der weiteren Linien jeweils zu direkt benachbarten weiteren Linien, insbesondere in dem Gittermuster, mindestens 0,03 mm, vorzugsweise mindestens 0,05 mm und besonders bevorzugt mindestens 0,06 mm.

Vorzugsweise wird in zumindest einem Verfahrensschritt, insbesondere vor einem Galvanisieren, der Grundkörper aus einem galvanisierbaren Material hergestellt. Bevorzugt ist der Grundkörper aus einem Kunststoff oder aus einem Metall ausgebildet. Bevorzugt ist der Grundkörper aus einem Stück geformt. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Insbesondere wird der Grundkörper in einem Spitzguss-Verfahren hergestellt. Es ist aber auch denkbar, dass der Grundkörper mehrteilig ausgebildet ist. Es ist auch denkbar, dass der Grundkörper zumindest teilweise aus Kunststoff, zumindest teilweise aus Metall, aus einer Kombination aus Kunststoff und Metall oder aus einem anderen, einem Fachmann als sinnvoll erscheinenden Werkstoff, der galvanisierbar ist, ausgebildet ist.

Bevorzugt wird in zumindest einem Verfahrensschritt bei einem Behandeln der, insbesondere durch die, vorzugsweise äußerste, metallische Schicht gebildete, Oberfläche des Bauteils mittels des Lasers insbesondere höchstens 99%, vorzugsweise höchstens 90% und bevorzugt höchstens 80%, einer maximalen Schichtdicke der, insbesondere äußersten, metallischen Schicht abgetragen. Insbesondere wird die, insbesondere äußerste, metallische Schicht bei der Behandlung der Oberfläche mittels des Lasers lediglich teilweise abgetragen und insbesondere nicht vollständig durchdrungen. Es ist jedoch denkbar, insbesondere falls das Bauteil mehr als eine metallische Schicht aufweist, dass Wechselwirkungen von mittels des Lasers generierten Photonen und Teilchen des Bauteils und/oder durch mittels des Lasers erzeugten thermischen Effekten in zumindest einer anderen, insbesondere unterhalb der, insbesondere äußersten, metallischen Schicht angeordneten, metallischen Schicht des Bauteils stattfinden, welche insbesondere die optischen Eigenschaften der Oberfläche der metallischen Schicht verändern.

Durch die erfindungsgemäße Ausgestaltung des Verfahrens kann eine vorteilhaft schnelle und genaue Herstellung der Dekoroberfläche ermöglicht werden. Es kann eine vorteilhaft komplexe Dekoroberfläche hergestellt werden, insbesondere da mittels des Lasers die Oberfläche flächenselektiv behandelt werden kann. Es kann eine vorteilhaft hohe Auflösung der aus der behandelten Oberfläche und/oder den nicht behandelten Bereichen der Oberfläche gebildeten Dekoroberfläche ermöglicht werden. Es kann eine vorteilhaft präzise Behandlung der Oberfläche ermöglicht werden, insbesondere da Parameter des Lasers hinsichtlich einer Veränderung der optischen Eigenschaften der Oberfläche vorteilhaft genau eingestellt werden können. Es kann eine vorteilhaft geringe Abtragung von Material der metallischen Schicht bei der Herstellung der Dekoroberfläche ermöglicht werden. Es kann eine vorteilhaft einfache und kostengünstige Nachahmung einer galvanisch-aufgebrachten metallischen Schicht, insbesondere Chromschicht, mit einer Mattoptik erreicht werden, insbesondere auf unebenen Oberflächen und/oder mit detailliert ausgebildeten Rändern. Dadurch können insbesondere detailliert ausgebildete Strukturen aus einer Kombination von, insbesondere auf demselben Bauteil angeordneten, Bereichen mit Mattoptik und Bereichen mit Glanzoptik ermöglicht werden, insbesondere zur Darstellung von Bildern, Schriften, Logos o. dgl.

Des Weiteren wird vorgeschlagen, dass in zumindest einem Verfahrensschritt zumindest eine zumindest im Wesentlichen glatte Oberfläche des Grundkörpers galvanisiert wird, welche insbesondere in einem mit dem Laser zu behandelnden Bereich des Bauteils angeordnet ist. Es können/kann eine vorteilhaft homogene Schichtdicke(n) von/einer galvanisch aufgebrachten metallischen Schicht(en) ermöglicht werden. Es kann eine vorteilhaft homogene optische Erscheinung der Dekoroberfläche, insbesondere der auf die Oberfläche des Grundkörpers aufgebrachten metallischen Schicht(en), erreicht werden. Es können vorteilhaft ansprechende optische Eigenschaften einer mit dem Laser behandelten, als Chromschicht ausgebildeten äußeren metallischen Schicht erreicht werden. Unter einer "im Wesentlichen glatten Oberfläche" soll insbesondere eine Oberfläche verstanden werden, die einen, insbesondere maximalen, Mittenrauwert von höchstens 0,2 µm, vorzugsweise höchstens 0,1 µm, bevorzugt höchstens 0,08 µm und besonders bevorzugt höchstens 0,06 µm, aufweist. Vorzugsweise wird der Grundkörper in zumindest einem Verfahrensschritt mittels eines Werkzeugs, insbesondere eines Gusswerkzeugs oder eines Spritzgusswerkzeugs, hergestellt, welches, insbesondere in einem Bereich der Oberfläche des Grundkörpers, eine zumindest im Wesentlichen glatte Werkzeugoberfläche aufweist. Bevorzugt weist die Oberfläche des Grundkörpers, welche insbesondere in dem mit dem Laser zu behandelnden Bereich des Bauteils angeordnet ist, und/oder die Werkzeugoberfläche einen, insbesondere maximalen, Mittenrauwert auf, der einem Wert aus einem Wertebereich von insbesondere 0,01 µm bis 0,1 µm, vorzugsweise 0,03 µm bis 0,08 µm und bevorzugt 0,05 µm bis 0,06 µm, entspricht. Bevorzugt ist die Werkzeugoberfläche poliert ausgebildet.

Zudem wird vorgeschlagen, dass in zumindest einem Verfahrensschritt der Grundkörper derart galvanisiert wird, dass die, insbesondere eine hinsichtlich des Grundkörpers äußerste, metallische Schicht eine minimale Schichtdicke von höchstens 5 µm, vorzugsweise höchstens 4 µm, bevorzugt höchstens 3 µm und besonders bevorzugt höchstens 2 µm, aufweist. Es können vorteilhaft geringe Herstellungskosten ermöglicht werden, insbesondere da Material der metallischen Schicht eingespart werden kann. Die Herstellung der Dekoroberfläche kann mit einer vorteilhaft geringen Laser-Leistung erreicht werden, insbesondere da die optischen Eigenschaften der Oberfläche durch bereits geringe Abtragungen und/oder Veränderungen der obersten metallischen Schicht verändert werden können. Es können vorteilhaft ansprechende optische Eigenschaften einer mit dem Laser behandelten, als Chromschicht ausgebildeten äußeren metallischen Schicht erreicht werden. Besonders bevorzugt beträgt die minimale Schichtdicke der, insbesondere hinsichtlich des Grundkörpers äußersten, metallischen Schicht, insbesondere nach dem Galvanisieren und/oder vor einer Behandlung mittels des Lasers, mindestens 0,2 µm, vorzugsweise mindestens 0,3 µm und bevorzugt mindestens 0,5 µm. Vorzugsweise ist die minimale Schichtdicke zumindest im Wesentlichen senkrecht zur Oberfläche des Grundkörpers ausgerichtet, insbesondere an einem Punkt, für den die minimale Schichtdicke angegeben ist. Unter "im Wesentlichen senkrecht" soll insbesondere eine Ausrichtung einer Geraden, einer Ebene oder einer Richtung, insbesondere eine Erstreckungsrichtung der minimalen Schichtdicke, relativ zu einer weiteren Geraden, einer weiteren Ebene, oder einer Bezugsrichtung, insbesondere der Oberfläche des Grundkörpers, verstanden werden, wobei die Gerade, die Ebene oder die Richtung und die weitere Gerade, die weitere Ebene oder die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise weist die, insbesondere hinsichtlich des Grundkörpers äußerste, metallische Schicht nach der Behandlung mittels des Lasers eine minimale Schichtdicke von mindestens 0,1 µm, vorzugsweise mindestens 0,2 µm und besonders bevorzugt mindestens 0,3 µm, auf. Bevorzugt weist die, insbesondere eine hinsichtlich des Grundkörpers äußerste, metallische Schicht eine maximale Schichtdicke auf, die insbesondere kleiner ist als 20 µm, vorzugsweise kleiner ist als 15 µm, bevorzugt kleiner ist als 10 µm und besonders bevorzugt kleiner ist als 5 µm.

Ferner wird vorgeschlagen, dass in zumindest einem Verfahrensschritt, insbesondere zu einer Behandlung der Oberfläche des Bauteils und/oder der metallischen Schicht, der Laser mit einer maximalen Leistung betrieben wird, die einen Wert aus einem Wertebereich von 2 Watt bis 10 Watt, vorzugsweise von 3 Watt bis 9 Watt, bevorzugt von 4 Watt bis 8 Watt und besonders bevorzugt von 5 Watt bis 7 Watt, aufweist. Es kann eine hinsichtlich einer Eindringtiefe in die metallische Schicht vorteilhaft optimierte Behandlung der Oberfläche mittels des Lasers erreicht werden. Es kann vorteilhaft eine Veränderung der optischen Eigenschaften der Oberfläche ohne eine Durchbrechung der metallischen Schicht ermöglicht werden. Es kann vorteilhaft eine Behandlung von dünnen Schichten ermöglicht werden, insbesondere ohne diese zu durchdringen. Es können vorteilhaft ansprechende optische Eigenschaften einer mit dem Laser behandelten, als Chromschicht ausgebildeten äußeren metallischen Schicht erreicht werden. Durch eine gezielte Anpassung der maximalen Leistung des Lasers und/oder weiterer Parameter des Lasers zur Behandlung der Oberfläche, wie beispielsweise einer Pulsdauer, einer Frequenz, einer Geschwindigkeit o. dgl., können verschiedene optische Eigenschaften, insbesondere verschiedene Farbmuster, der Oberfläche erreicht werden. In einer bevorzugten Ausgestaltung beträgt der Wert der maximalen Leistung des Lasers, insbesondere zu einer Behandlung der Oberfläche, zumindest im Wesentlichen 6 Watt. Bevorzugt ist der Laser als ein Festkörperlaser, insbesondere als ein Faselaser, ausgebildet. Insbesondere weist der Laser eine maximale Gesamtleistung von zumindest im Wesentlichen 20 Watt auf, wobei insbesondere der Laser zur Behandlung der Oberfläche mit einer maximalen Leistung betrieben wird, der 20 % bis 40 % der maximalen Gesamtleistung entspricht. Insbesondere erzeugt der Laser zur Behandlung der Oberfläche elektromagnetische Strahlung mit einer Wellenlänge, die einen Wert aus dem Infrarot-Bereich aufweist. Bevorzugt beträgt die Wellenlänge des Lasers zur Behandlung der Oberfläche zumindest im Wesentlichen 1064 nm. Vorzugsweise wird der Laser bei der Behandlung der Oberfläche mit einer Pulsdauer betrieben, die einen Wert aus einem Wertebereich zwischen 110 ns und 50 ns, vorzugsweise zwischen 100 ns und 70 ns und bevorzugt zwischen 100 ns und 80 ns, aufweist. Insbesondere wird der Laser bei der Behandlung der Oberfläche mit einer Pulsdauer von zumindest im Wesentlichen 100 ns betrieben. Vorzugsweise wird der Laser zur Behandlung der Oberfläche mit einer Frequenz betrieben, die einen Wert aus einem Wertebereich von insbesondere 10 kHz bis 50 kHz, vorzugsweise 15 kHz bis 40 kHz und bevorzugt 20 kHz bis 30 kHz, aufweist. Insbesondere wird der Laser zur Behandlung der Oberfläche mit einer Frequenz von zumindest im Wesentlichen 20 kHz betrieben.

Zudem wird vorgeschlagen, dass in zumindest einem Verfahrensschritt, insbesondere zu einer Behandlung der Oberfläche des Bauteils und/oder der metallischen Schicht, der Laser derart betrieben wird, dass ein Brennpunkt des Lasers zumindest im Wesentlichen innerhalb einer zu behandelnden Oberfläche der metallischen Schicht angeordnet ist. Es kann eine vorteilhaft genaue Berechnung einer mittels des Lasers auf die Oberfläche aufgebrachten Energie ermöglicht werden. Es kann eine vorteilhaft homogene Behandlung der Oberfläche erreicht werden. Es kann eine vorteilhaft hohe Auflösung der mittels des Lasers behandelten Oberfläche ermöglicht werden. Darunter, dass "ein Brennpunkt des Lasers zumindest im Wesentlichen innerhalb einer zu behandelnden Oberfläche der metallischen Schicht angeordnet ist" soll insbesondere verstanden werden, dass der Brennpunkt des Lasers in einem Bereich angeordnet ist, der sich innerhalb eines zumindest im Wesentlichen senkrecht zur Oberfläche ausgerichteten Abstands von insbesondere höchstens 0,5 µm, vorzugsweise höchstens 0,3 µm und bevorzugt höchstens 0,1 µm, zur Oberfläche erstreckt. Unter "im Wesentlichen gleichbleibend" soll insbesondere verstanden werden, dass sich ein Wert einer Kenngröße, insbesondere der Abstand des Lasers zur Oberfläche, über einen Zeitraum, insbesondere eine Dauer der Behandlung der Oberfläche mittels des Lasers, um höchstens 3%, vorzugsweise um höchstens 1% und besonders bevorzugt um höchstens 0,5%, ändert. Insbesondere in einer Ausgestaltung des Verfahrens, bei der der Laser in zumindest im Wesentlichen parallel zueinander ausgerichteten Linien und/oder einer anders gearteten periodischen Abfolge über die Oberfläche gefahren wird, wird der Laser zumindest während eines Abfahrens der Linie und/oder einer Bahn mit einem zumindest im Wesentlichen gleichbleibenden Abstand zur Oberfläche bewegt.

Ferner wird vorgeschlagen, dass in zumindest einem Verfahrensschritt zumindest eine haptische Eigenschaft einer Oberfläche der metallischen Schicht bei einer Behandlung der Oberfläche mittels des Lasers derart verändert wird, dass eine arithmetische Durchschnittshöhe der Oberfläche, insbesondere nach der Behandlung, höchstens 0,6 µm, insbesondere höchstens 0,4 µm, bevorzugt höchstens 0,3 µm und besonders bevorzugt höchstens 0,21 µm, beträgt. Es kann ein vorteilhaft geringer Unterschied von haptischen Eigenschaften, insbesondere eines Oberflächenempfindens durch einen Benutzer, der behandelten Oberfläche zu nicht behandelten Oberflächen der metallischen Schicht erreicht werden. Es kann eine vorteilhaft homogene Oberflächenbeschaffenheit des Bauteils ermöglicht werden. Vorzugsweise beträgt eine durchschnittliche quadratische Höhe der mittels des Lasers behandelten Oberfläche, insbesondere nach der Behandlung, insbesondere höchstens 1 µm, vorzugsweise höchstens 0,8 µm, bevorzugt höchstens 0,6 µm und besonders bevorzugt höchstens 0,38 µm. Bevorzugt beträgt eine maximale Höhe der mittels des Lasers behandelten Oberfläche, insbesondere nach der Behandlung, insbesondere höchstens 30 µm, vorzugsweise höchstens 20 µm, bevorzugt höchstens 10 µm und besonders bevorzugt höchstens 8,2 µm. Insbesondere sind/ist die arithmetische Durchschnittshöhe, die durchschnittliche quadratische Höhe und/oder die maximale Höhe der Oberfläche zumindest im Wesentlichen senkrecht zu der Oberfläche des Grundkörpers und/oder der metallischen Schicht ausgerichtet.

Des Weiteren wird vorgeschlagen, dass in zumindest einem Verfahrensschritt zumindest eine Oberfläche des Grundkörpers mit zumindest mehr als zwei voneinander verschieden ausgebildeten metallischen Schichten, insbesondere der oben genannten Chromschicht und zumindest zwei weiteren voneinander verschieden ausgebildeten metallischen Schichten, galvanisiert wird, welche insbesondere übereinander aufgebracht werden. Es kann eine optische Eigenschaft der Dekoroberfläche vorteilhaft einfach beeinflusst werden. Es kann eine vorteilhaft feste Haftung einer als Chromschicht ausgebildeten äußeren metallischen Schicht an dem Grundkörper ermöglicht werden, beispielsweise gegenüber Stößen, Kratzern und/oder temperaturbedingten Einflüssen. Es kann eine vorteilhaft dünne, als Chromschicht ausgebildete äußere metallische Schicht ermöglicht werden. Dadurch können vorteilhaft geringe Herstellungskosten ermöglicht werden, insbesondere da anstatt einer dickeren Chromschicht eine zusätzliche Schicht aus einem kostengünstigeren Material verwendet werden kann. Vorzugsweise wird die Oberfläche mit zumindest vier, insbesondere zumindest sechs, voneinander verschieden ausgebildeten metallischen Schichten galvanisiert. Insbesondere wird die Oberfläche des Grundkörpers zumindest mit der Chromschicht und mit zumindest einer Nickelschicht galvanisiert, wobei insbesondere die Chromschicht vom Grundkörper aus betrachtet als äußerste metallische Schicht ausgebildet ist. Es ist denkbar, dass der Grundkörper, insbesondere zusätzlich zur Chromschicht und/oder zusätzlich zu der Nickelschicht, mit einer Kupferschicht, insbesondere einer glänzenden Kupferschicht, galvanisiert wird, wobei insbesondere die Chromschicht vom Grundkörper aus betrachtet als äußerste metallische Schicht ausgebildet ist. Zusätzlich ist denkbar, dass der Grundkörper, insbesondere zusätzlich zur Chromschicht und/oder zusätzlich zu der Nickelschicht, mit zumindest einer oder zumindest mehr als einer weiteren Nickelschicht galvanisiert wird. Vorzugsweise sind die Nickelschicht und/oder die weitere(n) Nickelschicht(en) aus mikroporigem Nickel, aus glänzendem Nickel, aus Halbglanz-Nickel und/oder aus schlagfestem Nickel, insbesondere Anschlagnickel und/oder Nickel-Strike, ausgebildet. Insbesondere weisen die metallischen Schichten, insbesondere die Chromschicht, die Kupferschicht, die Nickelschicht und/oder die weitere(n) Nickelschicht(en), vorzugsweise nach dem Galvanisieren und/oder einem Polieren der metallischen Schicht und/oder vor der Behandlung mittels des Lasers, eine über die Oberfläche zumindest im Wesentlichen gleichbleibende Dicke auf. Unter "im Wesentlichen gleichbleibend" soll insbesondere verstanden werden, dass sich eine Größe, insbesondere die Dicke einer der metallischen Schichten, entlang einer Strecke, über die Zeit und/oder entlang einer Fläche, insbesondere über die Oberfläche, um höchstens 8%, vorzugsweise höchstens 5% und besonders bevorzugt höchstens 3%, eines durchschnittlichen Werts der Größe der gesamten Strecke, Fläche und/oder eines Zeitraums ändert.

Zudem wird vorgeschlagen, dass in zumindest einem Verfahrensschritt zumindest eine optische Eigenschaft einer Oberfläche der metallischen Schicht mittels des Lasers derart geändert wird, dass die Oberfläche zumindest in einem, insbesondere mit dem Laser behandelten, Teilbereich der Oberfläche eine Bürstoptik aufweist. Es kann eine vorteilhaft einfache, schnelle und kostengünstige Herstellung einer Dekoroberfläche mit Bürstoptik ermöglicht werden. Es kann eine Dekoroberfläche mit Bürstoptik mit vorteilhaft homogenen haptischen Eigenschaften erreicht werden, insbesondere da mittels des Lasers die Bürstoptik zumindest teilweise durch einen Farbumschlag der metallischen Schicht erreicht werden kann. Vorzugsweise wird zu einer Erzeugung der Bürstoptik zumindest ein Parameter, insbesondere die Pulsdauer, die Geschwindigkeit, die Leistung, die Wellenlänge o. dgl., des Lasers bei der Behandlung der Oberfläche zeitlich, insbesondere sprunghaft und/oder zufällig, geändert. Bevorzugt werden durch eine Änderung des Parameters des Lasers in zwei aufeinanderfolgenden Bereichen der Oberfläche unterschiedliche optische Eigenschaften erzeugt. Insbesondere wird der Laser derart betrieben, dass mittels der Änderung der optischen Eigenschaften einer Vielzahl von Bereichen der Oberfläche, die insbesondere zusammen den Teilbereich bilden, die Bürstoptik in dem Teilbereich entsteht. Es ist auch denkbar, dass die Bürstoptik durch ein vordefiniertes Muster gebildet ist, wobei zumindest ein Parameter des Lasers bei der Behandlung, insbesondere dem Abfahren, der Oberfläche mittels einer Steuereinheit des Lasers in Abhängigkeit von einer Position des Lasers auf der Oberfläche, insbesondere dem Teilbereich, angepasst wird. Vorzugsweise wird der Parameter des Lasers derart angepasst, dass die Bürstoptik im Teilbereich erzeugt wird. Alternativ oder zusätzlich ist denkbar, dass mittels einer gesteuerten Anpassung des zumindest einen Parameters des Lasers bei der Behandlung der Oberfläche zumindest eine Unterstruktur, beispielsweise ein Logo, eine Schrift oder ein Bild, auf der Oberfläche erzeugt wird.

Außerdem wird ein Bauteil, insbesondere ein Fahrzeugdekorbauteil, mit zumindest einer Dekoroberfläche, welche mittels eines erfindungsgemäßen Verfahrens hergestellt ist, vorgeschlagen. Vorzugsweise ist die Dekoroberfläche aus zumindest einer mittels des Lasers behandelten Oberfläche der metallischen Schicht und zumindest einer, insbesondere unbehandelten, weiteren Oberfläche der metallischen Schicht gebildet. Insbesondere begrenzt die mittels des Lasers behandelte Oberfläche die weitere Oberfläche. Bevorzugt umschließt die mittels des Lasers behandelte Oberfläche die weitere Oberfläche, insbesondere in einer Außenfläche des Bauteils betrachtet, zumindest größtenteils, insbesondere zumindest im Wesentlichen vollständig. Alternativ ist denkbar, dass die weitere Oberfläche die mittels des Lasers behandelte Oberfläche zumindest größtenteils, insbesondere zumindest im Wesentlichen vollständig, umschließt. Es ist denkbar, dass die mittels des Lasers behandelte Oberfläche und/oder die weitere Oberfläche eine Form eines Logos, eines Symbols und/oder eines Bildes aufweisen und/oder über eine Kontur die Form eines Logos, eines Symbols und/oder eines Bildes begrenzen. Besonders bevorzugt wird die Form des Logos, des Symbols und/oder des Bildes durch die mittels des Lasers veränderten optischen Eigenschaften der mittels des Lasers behandelten Oberfläche und/oder durch die Anordnung der mittels des Lasers behandelten Oberfläche neben der weiteren Oberfläche sichtbar. Insbesondere ist die Form des Logos, des Symbols und/oder des Bildes durch Übergänge einer Mattoptik und/oder Bürstoptik der mittels des Lasers behandelten Oberfläche zu einer Glanzoptik der unbehandelten Oberfläche auf dem Bauteil sichtbar ausgebildet.

Durch die erfindungsgemäße Ausgestaltung des Bauteils kann eine vorteilhaft komplexe Dekoroberfläche ermöglicht werden, insbesondere da mittels des Lasers die Oberfläche flächenselektiv behandelt werden kann. Es kann eine vorteilhaft hohe Auflösung der aus der behandelten Oberfläche beziehungsweise den nicht behandelten Bereichen der Oberfläche gebildeten Dekoroberfläche ermöglicht werden. Es kann eine vorteilhaft homogene Oberfläche der Dekoroberfläche hinsichtlich haptischer Eigenschaften ermöglicht werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Bauteils mit einer Dekoroberfläche, welche mittels eines erfindungsgemäßen Verfahrens hergestellt wurde,
- Fig. 2: eine schematische Darstellung eines Schnittes durch die Dekoroberfläche des erfindungsgemäßen Bauteils,
- Fig. 3: eine Nahansicht eines Teilausschnitts einer mittels eines Lasers behandelten Oberfläche der Dekoroberfläche des erfindungsgemäßen Bauteils, welche über eine Messung einer Oberflächenbeschaffenheit der Oberfläche erfasst wurde,
- Fig. 4: eine schematische Darstellung eines Ablaufs des erfindungsgemäßen Verfahrens zum Herstellen der Dekoroberfläche des erfindungsgemäßen Bauteils,
- Fig. 5: eine schematische Darstellung einer in einer alternativen Ausgestaltung eines erfindungsgemäßen Verfahrens hergestellten Dekoroberfläche eines erfindungsgemäßen Bauteils und
- Fig. 6: eine perspektivische schematische Darstellung einer alternativen Ausgestaltung eines erfindungsgemäßen Bauteils mit einer Dekoroberfläche, welche eine Bürstoptik aufweist und welche mit einer weiteren alternativen Ausgestaltung eines erfindungsgemäßen Verfahrens hergestellt wurde.

### Beschreibung der Ausführungsbeispiele

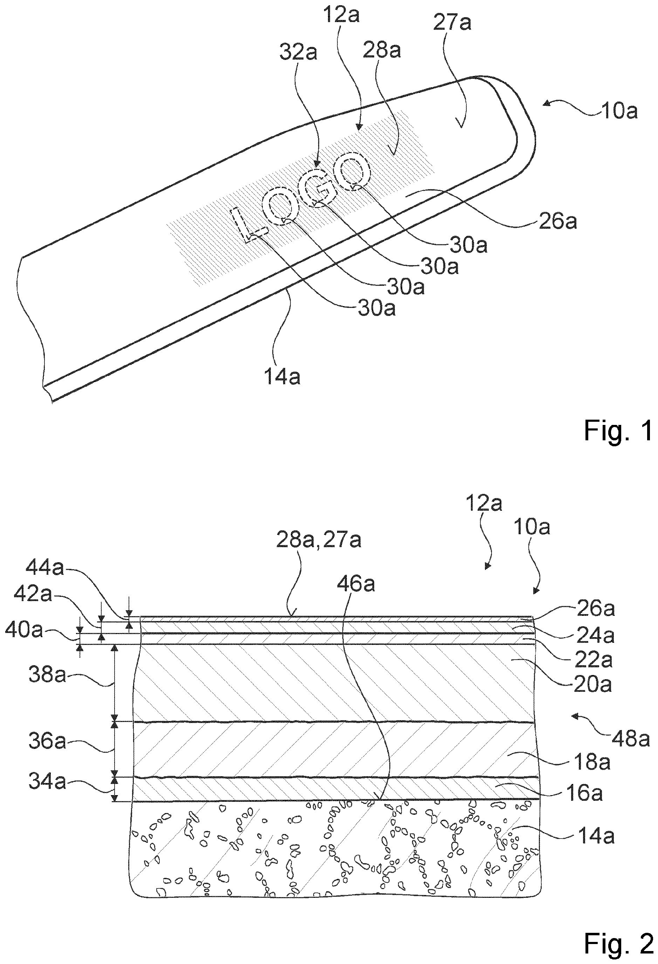

In Figur 1 ist ein Bauteil 10a mit einer Dekoroberfläche 12a gezeigt. Das Bauteil 10a ist als ein Fahrzeugdekorbauteil ausgebildet und insbesondere zu einer Abdeckung und/oder Verzierung eines Fahrzeuginnenraums vorgesehen. Das Bauteil 10a umfasst einen Grundkörper 14a. Der Grundkörper 14a ist aus einem Kunststoff, insbesondere aus einem galvanisierbaren Kunststoff, ausgebildet. Es ist aber auch denkbar, dass der Grundkörper 14a aus einem anderen Material ausgebildet ist, beispielsweise aus einem Metall. Der Grundkörper 14a gibt die Form des Bauteils 10a vor. Das Bauteil 10a weist eine Vielzahl von metallischen Schichten 16a, 18a, 20a, 22a, 24a, 26a auf (vgl. für eine Anordnung der Schichten auch Figur 2), welche insbesondere durch Galvanisieren auf den Grundkörper 14a aufgebracht sind. Eine, insbesondere hinsichtlich des Grundkörpers 14a, äußerste metallische Schicht 26a der metallischen Schichten 16a, 18a, 20a, 22a, 24a, 26a bildet eine Oberfläche 27a des Bauteils 10a oder ist zumindest Teil der Oberfläche 27a des Bauteils 10a. Eine mit einem Laser behandelte Oberfläche 28a einer, insbesondere der äußersten, metallischen Schicht 26a der metallischen Schichten 16a, 18a, 20a, 22a, 24a, 26a bildet zusammen mit an die Oberfläche 28a angrenzenden weiteren Oberflächen 30a, welche insbesondere bei einer Behandlung mittels des Lasers ausgespart wurden, die Dekoroberfläche 12a. Die weiteren Oberflächen 30a sind, insbesondere bis auf ein Galvanisieren der weiteren Oberflächen 30a, unbehandelt ausgebildet. Die Oberfläche 28a weist eine Mattoptik auf. Die weiteren Oberflächen 30a weisen eine Glanzoptik auf. Die weiteren Oberflächen 30a sind durch Übergänge von Glanzoptik zur Mattoptik von der Oberfläche 28a zu unterscheiden und bildet eine Unterstruktur 32a auf dem Bauteil 10a ab. Die Unterstruktur 32a ist als ein Logo ausgebildet. Es sind aber auch andere Ausgestaltungen der Unterstruktur 32a denkbar, beispielsweise als ein Text, als ein Bild o. dgl. Die Oberfläche 28a und die weiteren Oberflächen 30a sind jeweils als eine zumindest teilweise gebogene Fläche ausgebildet. Es sind aber auch andere Ausgestaltungen der Dekoroberfläche 12a, insbesondere der Oberfläche 28a und/oder der weiteren Oberflächen 30a, denkbar, wobei beispielsweise die behandelte Oberfläche 28a eine Glanzoptik aufweist und die weiteren Oberflächen 30a eine Mattoptik aufweisen und/oder wobei die Oberfläche 28a und/oder die weiteren Oberflächen 30a als ebene Fläche(n) ausgebildet sind/ist.

In Figur 2 ist ein Querschnitt durch die galvanisierte Oberfläche 27a des Bauteils 10a gezeigt. Das Bauteil 10a weist sechs verschiedene metallische Schichten 16a, 18a, 20a, 22a, 24a, 26a auf, die übereinander auf dem Grundkörper 14a angeordnet sind. Eine erste metallische Schicht 16a der metallischen Schichten 16a, 18a, 20a, 22a, 24a, 26a, welche direkt auf dem Grundkörper 14a angeordnet ist, insbesondere als innerste Schicht der metallischen Schichten 16a, 18a, 20a, 22a, 24a, 26a ausgebildet ist, ist aus schlagfestem Nickel, insbesondere Anschlagnickel und/oder Nickel-Strike, ausgebildet. Die erste metallische Schicht 16a weist eine Schichtdicke 34a auf, welche einem Wert aus einem Wertebereich zwischen 0,5 µm und 10 µm, vorzugsweise zwischen 3 µm und 10 µm und besonders bevorzugt zwischen 5 µm und 10 µm, entspricht. Eine zweite metallische Schicht 18a der metallischen Schichten 16a, 18a, 20a, 22a, 24a, 26a, welche direkt auf der ersten metallischen Schicht 16a angeordnet ist, ist aus glänzendem Kupfer ausgebildet. Die zweite metallische Schicht 18a weist eine Schichtdicke 36a auf, welche einem Wert aus einem Wertebereich zwischen 20 µm und 60 µm, vorzugsweise zwischen 25 µm und 50 µm und besonders bevorzugt zwischen 30 µm und 40 µm, entspricht. Eine dritte metallische Schicht 20a der metallischen Schichten 16a, 18a, 20a, 22a, 24a, 26a, welche direkt auf der zweiten metallischen Schicht 18a angeordnet ist, ist aus Halbglanz-Nickel ausgebildet. Die dritte metallische Schicht 20a weist eine Schichtdicke 38a auf, welche einem Wert aus einem Wertebereich zwischen 5 µm und 40 µm, vorzugsweise zwischen 10 µm und 30 µm und besonders bevorzugt zwischen 15 µm und 25 µm, entspricht. Eine vierte metallische Schicht 22a der metallischen Schichten 16a, 18a, 20a, 22a, 24a, 26a, welche direkt auf der dritten metallischen Schicht 20a angeordnet ist, ist aus glänzendem Nickel ausgebildet. Die vierte metallische Schicht 22a weist eine Schichtdicke 40a auf, welche einem Wert aus einem Wertebereich zwischen 2 µm und 8 µm, vorzugsweise zwischen 3 µm und 6 µm und besonders bevorzugt zwischen 3 µm und 5 µm, entspricht. Eine fünfte metallische Schicht 24a der metallischen Schichten 16a, 18a, 20a, 22a, 24a, 26a, welche direkt auf der vierten metallischen Schicht 22a angeordnet ist, ist aus mikroporigem Nickel ausgebildet. Die fünfte metallische Schicht 24a weist eine Schichtdicke 42a auf, welche einem Wert aus einem Wertebereich zwischen 0,5 µm und 5 µm, vorzugsweise zwischen 1 µm und 4 µm und besonders bevorzugt zwischen 1 µm und 3 µm, entspricht. Eine sechste metallische Schicht 26a der metallischen Schichten 16a, 18a, 20a, 22a, 24a, 26a, welche direkt auf der fünften metallischen Schicht 24a angeordnet ist, insbesondere als äußerste metallische Schicht des Bauteils 10a ausgebildet ist, ist aus mikroporigem Chrom ausgebildet. Die sechste metallische Schicht 26a bildet eine äußerste metallische Schicht des Bauteils, insbesondere hinsichtlich des Grundkörpers 14a. Die sechste metallische Schicht 26a weist eine minimale Schichtdicke 44a von höchstens 5 µm, vorzugsweise höchstens 4 µm, bevorzugt höchstens 3 µm und besonders bevorzugt höchstens 2 µm, auf. Die minimale Schichtdicke 44a der sechsten metallischen Schicht 26a weist insbesondere einen Wert von mindestens 0,2 µm, vorzugsweise mindestens 0,3 µm und bevorzugt mindestens 0,5 µm, auf. Eine Oberfläche 46a des Grundkörpers 14a, die in einem mit dem Laser zu behandelnden Bereich 48a des Bauteils 10a angeordnet ist und auf der die erste metallische Schicht 16a angeordnet ist, ist zumindest im Wesentlichen glatt ausgebildet. Insbesondere ist der Grundkörper 14a aus einem Stück geformt und mittels eines Spritzgussverfahrens hergestellt. Vorzugsweise ist die Oberfläche 46a des Grundkörpers 14a mittels einer zumindest im Wesentlichen glatten, insbesondere polierten, Werkzeugoberfläche eines Werkzeugs, insbesondere eines Gusswerkzeugs hergestellt und/oder ist nach einem Herstellen des Grundkörpers 14a, insbesondere vor dem Galvanisieren, poliert. Es sind aber auch andere Ausgestaltungen des Grundkörpers 14a denkbar, wobei beispielsweise der Grundkörper 14a mehrteilig ausgebildet ist und/oder eine raue Oberfläche 46a aufweist.

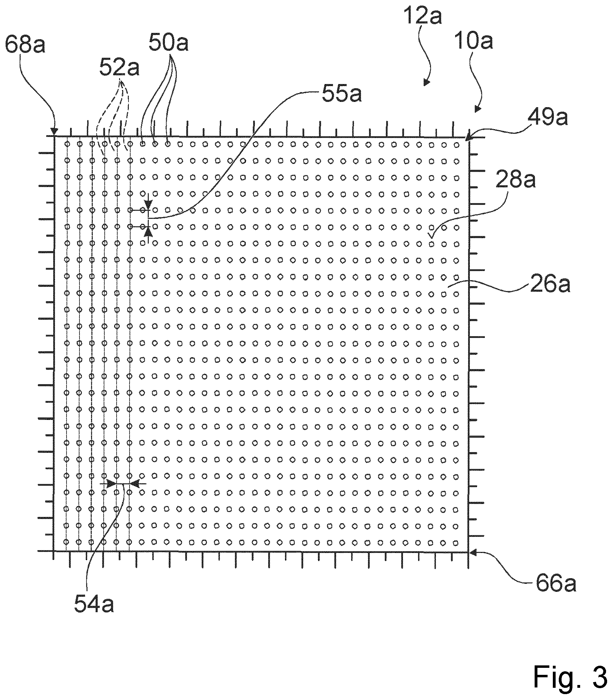

In Figur 3 ist eine Nahansicht eines Teilausschnitts 49a der mittels des Lasers behandelten Oberfläche 28a der sechsten metallischen Schicht 26a gezeigt, welche insbesondere mittels einer Messung, insbesondere einer Weißlicht-Entfernungsmessung, einer Oberflächenbeschaffenheit der Oberfläche 28a der sechsten metallischen Schicht 26a erfasst wurde. Eine Abszisse 66a und eine Ordinate 68a sind als Länge beziehungsweise Breite des Teilausschnitts 49a entlang der Oberfläche 28a der sechsten metallischen Schicht 26a ausgebildet. Ein aufgetragener farblicher Verlauf des Teilausschnitts 49a der Oberfläche 28a zeigt eine relative Höhe der Oberfläche 28a der sechsten metallischen Schicht 26a. Die Oberfläche 28a weist in regelmäßigen Abständen Vertiefungen 50a auf, die insbesondere relativ zur restlichen Oberfläche 28a der sechsten metallischen Schicht 26a eine niedrigere Höhe aufweisen. Die Vertiefungen 50a werden durch eine Wechselwirkung mit dem Laser erzeugt, welcher in gleichmäßig beabstandeten Linien 52a über die Oberfläche 28a der sechsten metallischen Schicht 26a gefahren wurde. Insbesondere sind die Linien 52a in der Figur 3 in einem Teilbereich des gezeigten Teilausschnitts 49a der Oberfläche 28a schematisch gezeigt. Die Linien 52a weisen einen minimalen Abstand 54a von zumindest im Wesentlichen 0,04 µm auf. Durch eine Pulsung des Lasers erfolgt eine gleichmäßig beabstandete Wechselwirkung des Lasers mit der Oberfläche 28a der sechsten metallischen Schicht 26a entlang der Linien 52a, wobei insbesondere die Oberfläche 28a der sechsten metallischen Schicht 26a in gleichmäßigen Abständen 55a teilweise abgetragen wird. Die Vertiefungen 50a entstehen über einen Materialabtrag der Oberfläche 28a bei einer Wechselwirkung mit dem Laser. Eine arithmetische Durchschnittshöhe der Oberfläche 28a entspricht höchstens 0,6 µm, insbesondere höchstens 0,4 µm, bevorzugt höchstens 0,3 µm und besonders bevorzugt höchstens 0,21 µm. Die mittels des Lasers behandelte Oberfläche 28a der sechsten metallischen Schicht 26a, welche insbesondere in Figur 3 im Teilausschnitt 49a gezeigt ist, weist eine Mattoptik auf, wobei die, insbesondere bis auf ein Galvanisieren, unbehandelten weiteren Oberflächen 30a (siehe Figur 1) eine Glanzoptik aufweisen.

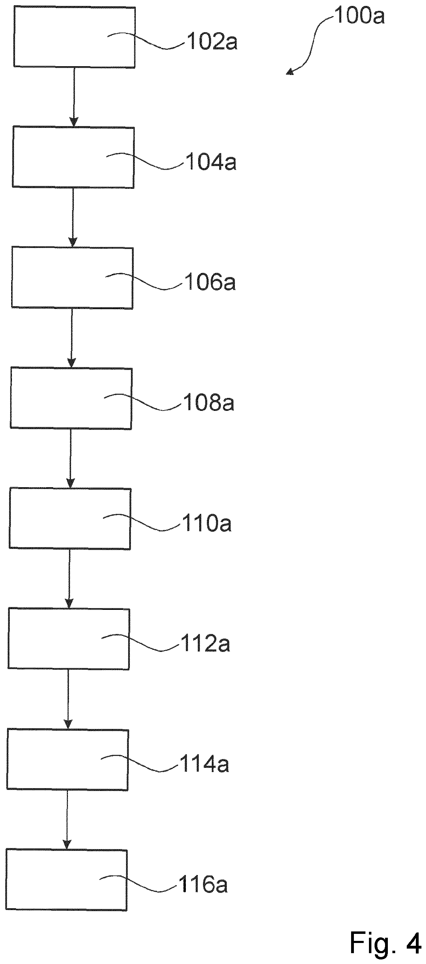

In Figur 4 ist ein Ablauf eines Verfahrens 100a zum Herstellen der Dekoroberfläche 12a des Bauteils 10a gezeigt. In einem Verfahrensschritt 102a des Verfahrens 100a wird der Grundkörper 14a des Bauteils 10a mittels eines Spritzgussverfahrens aus einem Kunststoff hergestellt. Vorzugsweise wird der Grundkörper 14a mittels eines Werkzeugs, insbesondere eines Gusswerkzeugs, hergestellt, welches, insbesondere in einem Bereich der Oberfläche 46a des Grundkörpers 14a, welcher in dem Bereich 48a der mittels des Lasers zu behandelnden Oberfläche 28a angeordnet ist, eine zumindest im Wesentlichen glatte Werkzeugoberfläche aufweist. Es ist denkbar, dass in zumindest einem weiteren Verfahrensschritt des Verfahrens 100a eine Nachbehandlung der zu galvanisierenden Oberfläche 46a des Grundkörpers 14a erfolgt, beispielsweise eine Reinigung und/oder ein Polieren.

In weiteren Verfahrensschritten 104a, 106a, 108a, 110a, 112a, 114a des Verfahrens 100a wird die zumindest im Wesentlichen glatte Oberfläche 46a des Grundkörpers 14a, welche insbesondere in dem mit dem Laser zu behandelnden Bereich 48a des Bauteils 10a angeordnet ist, galvanisiert. Der Grundkörper 14a, insbesondere die Oberfläche 46a des Grundkörpers 14a, wird mit den sechs voneinander verschieden ausgebildeten metallischen Schichten 16a, 18a, 20a, 22a, 24a, 26a galvanisiert. In einem Verfahrensschritt des Verfahrens 100a, insbesondere dem Verfahrensschritt 104a, wird der Grundkörper 14a des Bauteils 10a, der aus einem galvanisierbaren Material hergestellt ist, mit der ersten metallischen Schicht 16a galvanisiert. In einem Verfahrensschritt des Verfahrens 100a, insbesondere dem Verfahrensschritt 106a, wird der Grundkörper 14a des Bauteils 10a, auf dem insbesondere die erste metallische Schicht 16a aufgebracht ist, mit der zweiten metallischen Schicht 18a galvanisiert. In einem Verfahrensschritt des Verfahrens 100a, insbesondere dem Verfahrensschritt 108a, wird der Grundkörper 14a des Bauteils 10a, auf dem insbesondere die erste und die zweite metallische Schicht 16a, 18a aufgebracht sind, mit der dritten metallischen Schicht 20a galvanisiert. In einem Verfahrensschritt des Verfahrens 100a, insbesondere dem Verfahrensschritt 110a, wird der Grundkörper 14a des Bauteils 10a, auf dem insbesondere die erste, die zweite und die dritte metallische Schicht 16a, 18a, 20a aufgebracht sind, mit der vierten metallischen Schicht 22a galvanisiert. In einem Verfahrensschritt des Verfahrens 100a, insbesondere dem Verfahrensschritt 112a, wird der Grundkörper 14a des Bauteils 10a, auf dem insbesondere die erste, die zweite, die dritte und die vierte metallische Schicht 16a, 18a, 20a, 22a aufgebracht sind, mit der fünften metallischen Schicht 24a galvanisiert. In einem Verfahrensschritt des Verfahrens 100a, insbesondere dem Verfahrensschritt 114a, wird der Grundkörper 14a des Bauteils 10a, auf dem insbesondere die erste, die zweite, die dritte, die vierte und die fünfte metallische Schicht 16a, 28a, 20a, 22a, 24a aufgebracht sind, mit der sechsten metallischen Schicht 26a galvanisiert. Die sechs verschieden ausgebildeten metallischen Schichten 16a, 28a, 20a, 22a, 24a, 26a werden mittels Galvanisierung nacheinander aufgebracht, wobei insbesondere die erste metallische Schicht 16a auf den Grundkörper 14a aufgebracht wird und darauffolgend, insbesondere der Reihenfolge entsprechend, die zweite, die dritte, die vierte, die fünfte und die sechste metallische Schicht 18a, 20a, 22a, 24a, 26a aufgebracht werden. In einem Verfahrensschritt des Verfahrens, insbesondere dem Verfahrensschritt 114a, wird der Grundkörper 14a, auf dem insbesondere die erste, die zweite, die dritte, die vierte und die fünfte metallische Schicht 16a, 18a, 20a, 22a, 24a aufgebracht sind, derart galvanisiert, dass die sechste, insbesondere die hinsichtlich des Grundkörpers 14a äußerste, metallische Schicht 26a eine minimale Schichtdicke 44a von höchstens 5 µm, vorzugsweise höchstens 4 µm, bevorzugt höchstens 3 µm und besonders bevorzugt höchstens 2 µm, aufweist.

In einem weiteren Verfahrensschritt 116a des Verfahrens 100a wird die Oberfläche 28a der sechsten metallischen Schicht 26a mittels des Lasers behandelt, insbesondere zumindest eine optische Eigenschaft der Oberfläche 28a der sechsten metallischen Schicht 26a verändert. In einem Verfahrensschritt des Verfahrens 100a, insbesondere dem Verfahrensschritt 116a, insbesondere zu einer Behandlung der Oberfläche 28a der sechsten, insbesondere äußersten, metallischen Schicht 26a, wird der Laser mit einer maximalen Leistung betrieben, die einen Wert aus einem Wertebereich von 2 Watt bis 10 Watt, vorzugsweise von 3 Watt bis 9 Watt, bevorzugt von 4 Watt bis 8 Watt und besonders bevorzugt von 5 Watt bis 7 Watt, aufweist. In einem Verfahrensschritt des Verfahrens 100a, insbesondere dem Verfahrensschritt 116a, insbesondere zu einer Behandlung der Oberfläche 28a der sechsten, insbesondere äußersten, metallischen Schicht 26a, wird der Laser in den zumindest im Wesentlichen parallel zueinander ausgerichteten Linien 52a, insbesondere gleichmäßig, über die Oberfläche 28a der sechsten metallischen Schicht 26a gefahren, wobei ein minimaler Abstand 54a der Linien höchstens 0,12 mm, vorzugsweise höchstens 0,10 mm, bevorzugt höchstens 0,8 mm und besonders bevorzugt höchstens 0,06 mm, beträgt. In einem Verfahrensschritt des Verfahrens 100a, insbesondere dem Verfahrensschritt 116a, insbesondere zu einer Behandlung der Oberfläche 28a der sechsten, insbesondere äußersten, metallischen Schicht 26a, wird der Laser derart betrieben, dass ein Brennpunkt des Lasers zumindest im Wesentlichen innerhalb der zu behandelnden Oberfläche 28a der sechsten metallischen Schicht 26a angeordnet ist. In einem Verfahrensschritt des Verfahrens 100a, insbesondere dem Verfahrensschritt 116a, werden haptische Eigenschaften der Oberfläche 28a der sechsten metallischen Schicht 26a bei der Behandlung der Oberfläche 28a mittels des Lasers derart verändert, dass eine arithmetische Durchschnittshöhe der Oberfläche, insbesondere nach der Behandlung, höchstens 0,6 µm, insbesondere höchstens 0,4 µm, bevorzugt höchstens 0,3 µm und besonders bevorzugt höchstens 0,21 µm, beträgt.

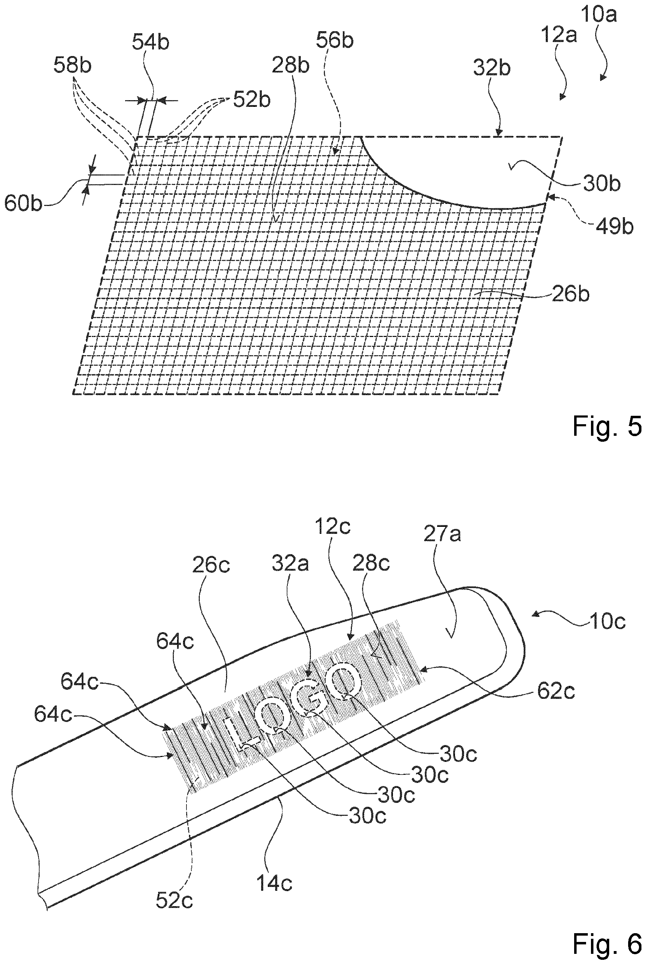

Zusätzlich ist auch denkbar, dass in einem Verfahrensschritt des Verfahrens 100a, insbesondere dem Verfahrensschritt 116a, optische Eigenschaften der Oberfläche 28a der sechsten metallischen Schicht 26a mittels des Lasers derart geändert werden, dass die Oberfläche 28a zumindest in einem, insbesondere mit dem Laser behandelten, Teilbereich der Oberfläche 28a eine Bürstoptik aufweist (siehe Figur 6). Vorzugsweise wird zu einer Herstellung der Bürstoptik in dem Teilbereich zumindest ein Parameter des Lasers, insbesondere mittels einer Steuereinheit des Lasers, während der Behandlung des Teilbereichs mittels des Lasers, insbesondere zufällig oder einem vorgegebenen Muster entsprechend, geändert.

In der Figur 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figur 5 ist der Buchstabe a durch den Buchstaben b ersetzt.

In Figur 5 ist eine alternative Ausgestaltung eines Bauteils 10b mit einer Dekoroberfläche 12b in einem Teilausschnitt 49b der Dekoroberfläche 12b gezeigt, wobei insbesondere der Teilausschnitt 49b eine mittels eines Lasers behandelte Oberfläche 28b einer, insbesondere äußersten, metallischen Schicht 26b des Bauteils 10b und teilweise eine, insbesondere bis auf eine Galvanisierung, unbehandelte weitere Oberfläche 30b der metallischen Schicht 26b umfasst. Das Bauteil 10b ist aus einem Grundkörper 14b (in Figur 5 nicht gezeigt) und einer Vielzahl von metallischen Schichten 16b, 18b, 20b, 22b, 24b, 26b (in Figur 5 ist lediglich die äußerste metallische Schicht 26b gezeigt) gebildet, welche insbesondere durch Galvanisieren auf den Grundkörper 14b aufgebracht sind. Das in der Figur 5 dargestellte Bauteil 10b weist eine zumindest im Wesentlichen analoge Ausgestaltung zu dem in der Beschreibung der Figuren 1 bis 4 beschriebenen Bauteil 10a auf, so dass bezüglich einer Ausgestaltung des in der Figur 5 dargestellten Bauteils 10b zumindest im Wesentlichen auf die Beschreibung der Figuren 1 bis 4 verwiesen werden kann. Im Unterschied zu dem in der Beschreibung der Figuren 1 bis 4 beschriebenen Bauteil 10a ist die mittels des Lasers behandelte Oberfläche 28b der, insbesondere äußeren, metallischen Schicht 26b des in der Figur 5 dargestellten Bauteils 10b vorzugsweise über eine gitterförmige Schraffur der Oberfläche durch den Laser erzeugt. Der Laser wird bei einer Behandlung der Oberfläche 28b der metallischen Schicht 26b in einem Gittermuster 56b über die Oberfläche 28b gefahren, wobei insbesondere der Laser in gleichmäßig beabstandeten Linien 52b über die Oberfläche 28b gefahren wird und anschließend in zumindest im Wesentlichen senkrecht zu den Linien 52b ausgerichteten weiteren Linien 58b über die Oberfläche 28b gefahren wird. Die Linien 52b weisen jeweils zu direkt benachbarten Linien 52b, insbesondere in dem Gittermuster 56b, einen minimalen Abstand 54b von höchstens 0,16 mm, vorzugsweise höchstens 0,14 mm, bevorzugt höchstens 0,12 mm und besonders bevorzugt höchstens 0,11 mm, auf. Insbesondere beträgt der minimale Abstand 54b der Linien 52b jeweils zu direkt benachbarten Linien 52b, insbesondere in dem Gittermuster 56b, mindestens 0,03 mm, vorzugsweise mindestens 0,05 mm und besonders bevorzugt mindestens 0,06 mm. Die weiteren Linien 58b weisen jeweils zu direkt benachbarten weiteren Linien 58b, insbesondere in dem Gittermuster 56b, einen minimalen Abstand 60b von höchstens 0,16 mm, vorzugsweise höchstens 0,14 mm, bevorzugt höchstens 0,12 mm und besonders bevorzugt höchstens 0,11 mm, auf. Insbesondere beträgt der minimale Abstand 60b der weiteren Linien 58b jeweils zu direkt benachbarten weiteren Linien 58b, insbesondere in dem Gittermuster 56b, mindestens 0,03 mm, vorzugsweise mindestens 0,05 mm und besonders bevorzugt mindestens 0,06 mm. Die mittels des Lasers behandelte Oberfläche 28b der, insbesondere äußersten, metallischen Schicht 26b weist eine Mattoptik auf, wobei die, insbesondere bis auf ein Galvanisieren, unbehandelte weitere Oberfläche 30b eine Glanzoptik aufweist.

In Figur 6 ist eine weitere alternative Ausgestaltung eines Bauteils 10c mit einer Dekoroberfläche 12c gezeigt. Das Bauteil 10c ist aus einem Grundkörper 14c und einer Vielzahl von metallischen Schichten 16c, 18c, 20c, 22c, 24c, 26c (in Figur 6 ist lediglich die äußerste metallische Schicht 26c gezeigt) gebildet, welche insbesondere durch Galvanisieren auf den Grundkörper 14c aufgebracht sind. Das in der Figur 6 dargestellte Bauteil 10c weist eine zumindest im Wesentlichen analoge Ausgestaltung zu dem in der Beschreibung der Figuren 1 bis 4 beschriebenen Bauteil 10a auf, so dass bezüglich einer Ausgestaltung des in der Figur 6 dargestellten Bauteils 10c zumindest im Wesentlichen auf die Beschreibung der Figuren 1 bis 4 verwiesen werden kann. Im Unterschied zu dem in der Beschreibung der Figuren 1 bis 4 beschriebenen Bauteil 10a weist eine mittels des Lasers behandelte Oberfläche 28c einer, insbesondere äußeren, metallischen Schicht 26c des in der Figur 6 dargestellten Bauteils 10c vorzugsweise eine Bürstoptik auf. Vorzugsweise werden optische Eigenschaften der Oberfläche 28c der metallischen Schicht 26c mittels des Lasers derart geändert, dass die Oberfläche 28c, insbesondere in einem mit dem Laser behandelten Teilbereich 62c, der Oberfläche 28c die Bürstoptik aufweist. Mittels des Lasers, insbesondere bis auf ein Galvanisieren, unbehandelte weitere Oberflächen 30c der metallischen Schicht 26c sind von der Oberfläche 28c begrenzt und weisen eine Glanzoptik auf. Es ist aber auch denkbar, dass die weiteren Oberflächen 30c eine Mattoptik aufweisen. Zu einer Erzeugung der Bürstoptik wird ein Parameter, insbesondere die Leistung, des Lasers bei der Behandlung der Oberfläche 28c zeitlich sprunghaft geändert, wodurch die Oberfläche 28c, insbesondere zumindest der Teilbereich 62c, entlang einer mit dem Laser abgefahrenen Linie 52c voneinander verschiedene optische Eigenschaften, insbesondere verschiedene Farbtöne, aufweist. Der Laser wird derart betrieben, dass mittels der Änderung der optischen Eigenschaften einer Vielzahl von Bereichen 64c der Oberfläche 28c, die insbesondere zusammen den Teilbereich 62c bilden, die Bürstoptik entsteht. Es ist auch denkbar, dass die Bürstoptik durch ein vordefiniertes Muster gebildet ist, wobei ein Parameter des Lasers bei der Behandlung, insbesondere dem Abfahren, der Oberfläche 28c der metallischen Schicht 26c mittels einer Steuereinheit des Lasers in Abhängigkeit von einer Position des Lasers auf der Oberfläche 28c, insbesondere dem Teilbereich 62c, derart angepasst wird, dass die Bürstoptik erzeugt wird. Mittels einer gesteuerten Anpassung des zumindest einen Parameters des Lasers wird bei der Behandlung der Oberfläche 28c eine Unterstruktur 32c erzeugt, die aus der Oberfläche 28c und mittels des Lasers unbehandelten weiteren Oberflächen 30c der metallischen Schicht 26c gebildet wird. Die Unterstruktur 32c ist als ein Logo ausgebildet. Es sind aber auch weitere Ausgestaltungen der Unterstruktur 32c denkbar. Die Unterstruktur 32c wird aus den weiteren Oberflächen 30c der, insbesondere äußersten, metallischen Schicht 26c ausgebildet, welche insbesondere eine Glanzoptik aufweisen. Die mittels des Lasers behandelte Oberfläche 28c, welche die Bürstoptik aufweist, begrenzt die weiteren Oberflächen 30c und/oder die Unterstruktur 32c zumindest im Wesentlichen vollständig. Es sind aber auch andere Ausgestaltungen der Dekoroberfläche 12c, insbesondere der Oberfläche 28c, der weiteren Oberflächen 30c und/oder der Unterstruktur 32c denkbar.

## Patentansprüche

1. Verfahren zum Herstellen einer Dekoroberfläche eines Bauteils, insbesondere eines Fahrzeugdekorbauteils, wobei in zumindest einem Verfahrensschritt (104a, 106a, 108a, 110a, 112a, 114a) zumindest ein Grundkörper (14a; 14b; 14c) des Bauteils (10a; 10b; 10c), der aus einem galvanisierbaren Material hergestellt ist, mit zumindest einer metallischen Schicht (16a, 18a, 20a, 22a, 24a, 26a; 16b, 18b, 20b, 22b, 24b, 26b; 16c, 18c, 20c, 22c, 24c, 26c), insbesondere zumindest einer Chromschicht, galvanisiert wird, wobei in zumindest einem Verfahrensschritt (116a) zumindest eine Oberfläche (28a; 28b; 28c) der metallischen Schicht (26a; 26b; 26c) mittels eines Lasers behandelt wird, wodurch zumindest eine optische Eigenschaft zumindest der Oberfläche (28a; 28b; 28c) der metallischen Schicht (26a; 26b; 26c) verändert wird, **dadurch gekennzeichnet, dass** in zumindest einem Verfahrensschritt (116a) der Laser in zumindest im Wesentlichen parallel zueinander ausgerichteten Linien (52a; 52b; 52c), gleichmäßig, über die Oberfläche (28a; 28b; 28c) der metallischen Schicht (26a; 26b; 26c) gefahren wird, wobei ein minimaler Abstand (54a; 54b; 54c) der Linien höchstens 0,12 mm beträgt, wobei der Laser zur Behandlung der Oberfläche der metallischen Schicht (26a; 26b; 26c) mit einer konstanten Geschwindigkeit relativ zu der Oberfläche der metallischen Schicht (26a; 26b; 26c) bewegt wird und wobei der Laser während der Behandlung der Oberfläche der metallischen Schicht (26a; 26b; 26c) in einem zumindest im Wesentlichen gleichbleibenden Abstand zu der Oberfläche der metallischen Schicht (26a; 26b; 26c) bewegt wird.

2. Verfahren nach Anspruch 1, **dadurch gekennzeichnet, dass** in zumindest einem Verfahrensschritt (104a) zumindest eine zumindest im Wesentlichen glatte Oberfläche (46a) des Grundkörpers (14a; 14b; 14c) galvanisiert wird, welche insbesondere in einem mit dem Laser zu behandelnden Bereich (48a) des Bauteils (10a; 10b; 10c) angeordnet ist.

3. Verfahren zumindest nach Anspruch 1 oder 2, **dadurch gekennzeichnet, dass** in zumindest einem Verfahrensschritt der Grundkörper (14a; 14b; 14c) derart galvanisiert wird, dass die, insbesondere eine hinsichtlich des Grundkörpers (14a; 14b; 14c) äußerste, metallische Schicht (26a; 26b; 26c) eine minimale Schichtdicke (44a) von höchstens 5 µm aufweist.

4. Verfahren nach einem der vorhergehenden Ansprüche, **dadurch gekennzeichnet, dass** in zumindest einem Verfahrensschritt (116a) der Laser mit einer maximalen Leistung betrieben wird, die einen Wert aus einem Wertebereich von 2 Watt bis 10 Watt aufweist.

5. Verfahren nach einem der vorhergehenden Ansprüche, **dadurch gekennzeichnet, dass** in zumindest einem Verfahrensschritt (116a) der Laser derart betrieben wird, dass ein Brennpunkt des Lasers zumindest im Wesentlichen innerhalb einer zu behandelnden Oberfläche (28a; 28b; 28c) der metallischen Schicht (26a; 26b; 26c) angeordnet ist.

6. Verfahren nach einem der vorhergehenden Ansprüche, **dadurch gekennzeichnet, dass** in zumindest einem Verfahrensschritt (116a) zumindest eine haptische Eigenschaft einer Oberfläche (28a; 28b; 28c) der metallischen Schicht (26a; 26b; 26c) bei einer Behandlung der Oberfläche (28a; 28b; 28c) mittels des Lasers derart verändert wird, dass eine arithmetische Durchschnittshöhe der Oberfläche (28a; 28b; 28c), insbesondere nach der Behandlung, höchstens 0,6 µm beträgt.

7. Verfahren nach einem der vorhergehenden Ansprüche, **dadurch gekennzeichnet, dass** in zumindest einem Verfahrensschritt (108a, 110a, 112a, 114a) zumindest eine Oberfläche (46a) des Grundkörpers (14a; 14b; 14c) mit zumindest mehr als zwei voneinander verschieden ausgebildeten metallischen Schichten (16a, 18a, 20a, 22a, 24a, 26a; 16b, 18b, 20b, 22b, 24b, 26b; 16c, 18c, 20c, 22c, 24c, 26c) galvanisiert wird, welche insbesondere übereinander aufgebracht werden.

8. Verfahren nach einem der vorhergehenden Ansprüche, **dadurch gekennzeichnet, dass** in zumindest einem Verfahrensschritt (116a) zumindest eine optische Eigenschaft einer Oberfläche (28a; 28b; 28c) der metallischen Schicht (26a; 26b; 26c) mittels des Lasers derart geändert wird, dass die Oberfläche (28a; 28b; 28c) zumindest in einem, insbesondere mit dem Laser behandelten, Teilbereich (62c) der Oberfläche (28a; 28b; 28c) eine Bürstoptik aufweist.

## Claims

1. Method for producing a decorative surface of a component, in particular of a decorative vehicle component,
wherein in at least one method step (104a, 106a, 108a, 110a, 112a, 114a), at least one base body (14a; 14b; 14c) of the component (10a; 10b; 10c), which is produced from a galvanizable material, is galvanized with at least one metallic layer (16a, 18a, 20a, 22a, 24a, 26a; 16b, 18b, 20b, 22b, 24b, 26b; 16c, 18c, 20c, 22c, 24c, 26c), in particular at least one chromium layer,
wherein in at least one method step (116a), at least one surface (28a; 28b; 28c) of the metallic layer (26a; 26b; 26c) is treated by means of a laser, as a result of which at least one optical property at least of the surface (28a; 28b; 28c) of the metallic layer (26a; 26b; 26c) is changed,
**characterised in that** in at least one method step (116a), the laser is moved uniformly, in at least substantially mutually parallel aligned lines (52a; 52b; 52c), over the surface (28a; 28b; 28c) of the metallic layer (26a; 26b; 26c),
wherein a minimum spacing (54a; 54b; 54c) of the lines is at most 0.12 mm, wherein for the treatment of the surface of the metallic layer (26a; 26b; 26c), the laser is moved at a constant speed relative to the surface of the metallic layer (26a; 26b; 26c), and
wherein, during the treatment of the surface of the metallic layer (26a; 26b; 26c), the laser is moved at an at least substantially constant distance from the surface of the metallic layer (26a; 26b; 26c).

2. Method according to claim 1,
**characterised in that** in at least one method step (104a), at least one at least substantially smooth surface (46a) of the base body (14a; 14b; 14c), which is in particular arranged in a region (48a) of the component (10a; 10b; 10c) that is to be treated with the laser, is galvanized.

3. Method at least according to Claim 1 or 2,
**characterised in that** in at least one method step, the base body (14a; 14b; 14c) is galvanized in such a way that the metallic layer (26a; 26b; 26c), in particular an outermost metallic layer (26a; 26b; 26c) with respect to the base body (14a; 14b; 14c), has a minimum layer thickness (44a) of at most 5 µm.

4. Method according to one of the preceding claims,
**characterised in that** in at least one method step (116a), the laser is operated with a maximum power which has a value from a value range of 2 watts to 10 watts.

5. Method according to one of the preceding claims,
**characterised in that** in at least one method step (116a), the laser is operated in such a way that a focal point of the laser is arranged at least substantially within a surface (28a; 28b; 28c) of the metallic layer (26a; 26b; 26c), which is to be treated.

6. Method according to one of the preceding claims,
**characterised in that** in at least one method step (116a), during a treatment of the surface (28a; 28b; 28c) by means of the laser, at least one haptic property of a surface (28a; 28b; 28c) of the metallic layer (26a; 26b; 26c) is changed in such a way that an arithmetic average height of the surface (28a; 28b; 28c), in particular after the treatment, is at most 0.6 µm.

7. Method according to one of the preceding claims,
**characterised in that** in at least one method step (108a, 110a, 112a, 114a), at least one surface (46a) of the base body (14a; 14b; 14c) is galvanized with at least more than two metallic layers (16a, 18a, 20a, 22a, 24a, 26a; 16b, 18b, 20b, 22b, 24b, 26b; 16c, 18c, 20c, 22c, 24c, 26c), which are realized differently from one another and which are in particular applied in particular one above the other.

8. Method according to one of the preceding claims,
**characterised in that** in at least one method step (116a), at least one optical property of a surface (28a; 28b; 28c) of the metallic layer (26a; 26b; 26c) is changed by means of the laser in such a way that the surface (28a; 28b; 28c) has a brushed optical appearance, at least in a partial region (62c) of the surface (28a; 28b; 28c), in particular a partial region (62c) of the surface (28a; 28b; 28c) treated with the laser.

## Revendications

1. Procédé de fabrication d'une surface décorative d'un composant, en particulier d'un composant décoratif de véhicule,
où dans au moins une étape de procédé (104a, 106a, 108a, 110a, 112a, 114a) au moins un corps de base (14a ; 14b ; 14c) du composant (10a ; 10b ; 10c), qui est fabriqué à partir d'un matériau galvanisable, est galvanisé avec au moins une couche métallique (16a, 18a, 20a, 22a, 24a, 26a ; 16b, 18b, 20b, 22b, 24b, 26b ; 16c, 18c, 20c, 22c, 24c, 26c), en particulier au moins une couche de chrome, où dans au moins une étape de procédé (116a) au moins une surface (28a ; 28b ; 28c) de la couche métallique (26a ; 26b ; 26c) est traitée au moyen d'un laser, moyennant quoi au moins une propriété optique au moins de la surface (28a ; 28b ; 28c) de la couche métallique (26a ; 26b ; 26c) est modifiée,
**caractérisé en ce que** dans au moins une étape de procédé (116a) le laser est déplacé de manière uniforme sur la surface (28a ; 28b ; 28c) de la couche métallique (26a ; 26b ; 26c) dans des lignes (52a ; 52b ; 52c) orientées au moins sensiblement parallèlement les unes aux autres,
où une distance minimale (54a ; 54b ; 54c) des lignes est d'au plus 0,12 mm, où le laser est déplacé pour le traitement de la surface de la couche métallique (26a ; 26b ; 26c) à une vitesse constante par rapport à la surface de la couche métallique (26a ; 26b ; 26c) et
où le laser est déplacé pendant le traitement de la surface de la couche métallique (26a ; 26b ; 26c) à une distance au moins sensiblement constante par rapport à la surface de la couche métallique (26a ; 26b ; 26c).

2. Procédé selon la revendication 1,
**caractérisé en ce que** dans au moins une étape de procédé (104a) au moins une surface au moins sensiblement lisse (46a) du corps de base (14a ; 14b ; 14c), disposée en particulier dans une zone (48a) du composant (10a ; 10b ; 10c) qui est à traiter avec le laser, est galvanisée.

3. Procédé au moins selon la revendication 1 ou 2,
**caractérisé en ce que** dans au moins une étape de procédé le corps de base (14a ; 14b ; 14c) est galvanisé de telle manière que la couche métallique (26a ; 26b ; 26c), en particulier une couche métallique (26a ; 26b ; 26c) la plus extérieure par rapport au corps de base (14a ; 14b ; 14c), présente une épaisseur de couche minimale (44a) d'au plus 5 µm.

4. Procédé selon l'une des revendications précédentes,
**caractérisé en ce que** dans au moins une étape de procédé (116a) le laser est fait fonctionner avec une puissance maximale ayant une valeur d'une plage de valeurs de 2 watts à 10 watts.

5. Procédé selon l'une des revendications précédentes,
**caractérisé en ce que** dans au moins une étape de procédé (116a) le laser est fait fonctionner de telle manière qu'un point focal du laser est disposé au moins sensiblement à l'intérieur d'une surface à traiter (28a ; 28b ; 28c) de la couche métallique (26a ; 26b ; 26c).

6. Procédé selon l'une des revendications précédentes,
**caractérisé en ce que** dans au moins une étape de procédé (116a), lors d'un traitement de la surface (28a ; 28b ; 28c) au moyen du laser, au moins une propriété haptique d'une surface (28a ; 28b ; 28c) de la couche métallique (26a ; 26b ; 26c) est modifiée de telle manière qu'une hauteur moyenne arithmétique de la surface (28a ; 28b ; 28c), en particulier après le traitement, est d'au plus 0,6 µm.

7. Procédé selon l'une des revendications précédentes,
**caractérisé en ce que** dans au moins une étape de procédé (108a, 110a, 112a, 114a) au moins une surface (46a) du corps de base (14a ; 14b ; 14c) est galvanisée avec au moins plus de deux couches métalliques (16a, 18a, 20a, 22a, 24a, 26a ; 16b, 18b, 20b, 22b, 24b, 26b ; 16c, 18c, 20c, 22c, 24c, 26c) qui sont réalisées différemment l'une de l'autre et qui sont appliquées en particulier l'une au-dessus de l'autre.

8. Procédé selon l'une des revendications précédentes,
**caractérisé en ce que** dans au moins une étape de procédé (116a) au moins une propriété optique d'une surface (28a ; 28b ; 28c) de la couche métallique (26a ; 26b ; 26c) est modifiée au moyen du laser de telle manière que la surface (28a ; 28b ; 28c) présente une optique de brossage au moins dans une zone partielle (62c), en particulier une zone partielle (62c) traitée avec le laser, de la surface (28a ; 28b ; 28c).
